# EUROPÄISCHE PATENTSCHRIFT

(11) **EP 2 909 452 B1**
(45) Veröffentlichungstag und Bekanntmachung des Hinweises auf die Patenterteilung: **20.02.2019**
(21) Anmeldenummer: 12818781.2
(22) Anmeldetag: 21.12.2012
(51) Int. Cl.: F01K 9/00, F01K 25/08, F01D 15/10, F01D 25/12, F01D 25/16

(54) **VORRICHTUNG ZUM ERZEUGEN ELEKTRISCHER ENERGIE MITTELS EINES ORC-KREISLAUFS**
APPARATUS FOR PRODUCING ELECTRICAL ENERGY WITH AN ORC CYCLE
APPAREIL POUR LA PRODUCTION D'ÉNERGIE ÉLECTRIQUE A L'AIDE D'UN CYCLE ORGANIQUE DE RANKINE

(30) Priorität: 26.06.2012 DE 102012210803
(43) Veröffentlichungstag der Anmeldung: 26.08.2015
(73) Patentinhaber: Saxess Holding GmbH, 61476 Kronberg im Taunus (DE)
(72) Erfinder: OMORUYL, John, 60431 Frankfurt am Main (DE)
(74) Vertreter: Westphal, Mussgnug & Partner Patentanwälte mbB
(86) Internationale Anmeldenummer: PCT/EP2012/076672
(87) Internationale Veröffentlichungsnummer: WO 2014/000830

(56) Entgegenhaltungen:
- EP-A1- 1 273 764
- WO-A1-2008/124868
- WO-A1-2012/049259
- DE-A1-102005 014 959
- DE-U1-202009 002 710
- US-A1- 2007 007 771
- US-A1- 2010 212 316

## Beschreibung

Die vorliegende Erfindung betrifft eine Vorrichtung zum Durchführen eines ORC-Prozesses, umfassend einen ersten Kreislauf, in welchem ein erstes Prozessfluid geführt wird, mit einem Verdampfer zum Verdampfen des ersten Prozessfluids, einer stromabwärts des Verdampfers angeordneten Entspannungsmaschine zum Entspannen des verdampften ersten Prozessfluids, wobei die Entspannungsmaschine mit einem Generator zum Erzeugen von elektrischer Energie verbindbar ist, einem stromabwärts der Entspannungsmaschine angeordneten ersten Kondensator zum Kondensieren des entspannten ersten Prozessfluids, und einer stromabwärts des ersten Kondensators angeordneten ersten Fluidenergiemaschine zum Erhöhen des Drucks des kondensierten ersten Prozessfluids und zum Fördern des ersten Prozessfluids zum Verdampfer, der stromabwärts der ersten Fluidenergiemaschine angeordnet ist. Unter Fluidenergiemaschine soll in diesem Zusammenhang eine Maschine verstanden werden, die mechanische Arbeit mit dem Prozessfluid austauscht.

Derartige ORC-Prozesse sind seit langer Zeit bekannt und kommen vor allem dann zum Einsatz, wenn das zur Verfügung stehende Temperaturgefälle zwischen Wärmequelle und Wärmesenke zu niedrig für den Betrieb einer von Wasserdampf angetriebenen Entspannungsmaschine ist. Anwendungsgebiete von ORC-Prozessen sind beispielsweise die Abwärme oder Restwärme von Fertigungsprozessen, Industrieanlagen, Schornsteinen, Biogasanlagen, Blockheizkraftwerken oder überall dort, wo Abwärme entsteht, die ein Temperaturniveau von in etwa 80 bis 250°C und höher aufweist. Derartige ORC-Prozesse sind beispielsweise in der DE 10 2009 049 338 A1 oder der DE 10 2007 035 058 A1 offenbart. Mit den Entspannungsmaschinen wird üblicherweise ein Generator zum Erzeugen von elektrischer Energie angetrieben, die entweder selbst verwendet oder in das öffentliche Stromnetz eingespeist werden kann.

Weitere ORC-Prozesse sind in der DE 10 2005 014 959 A1 und der US 2007/007771 A1 beschrieben. In der DE 10 2005 014 959 A1 wird eine Vorrichtung beschrieben, mit welcher ein ORC-Prozess durchgeführt werden kann, wobei Propan als Prozessfluid verwendet wird. Der Hauptkreislauf ist ganz typisch für einen thermischen Prozess aufgebaut und umfasst einen Verdampfer, eine Entspannungsmaschine, einen Kondensator sowie eine Pumpe. Zusätzlich ist ein Nebenkreislauf vorhanden, der Wärme vom Kondensator zum Verdampfer oder zu einem Erhitzer transportiert.

Eine großflächige Verbreitung haben die ORC-Prozesse jedoch aufgrund ihres niedrigen elektrischen Wirkungsgrads von unter 10% nicht gefunden, da die zu seiner Durchführung notwendigen Investitionen die erzielbaren Einsparungen oder Gewinne bei weitem überschreiten. Die anfallende Abwärme wird daher in den meisten Fällen ohne Verwendung eines ORC- oder anderen Prozesses an die Umwelt abgegeben, was aus wirtschaftlichen und ökologischen Gründen nicht optimal ist. Insbesondere vor dem Hintergrund eines nachhaltigen Umgangs mit vorhandener Energie besteht an dieser Stelle ein großes Bedürfnis, die in der Abwärme enthaltene Energie bestmöglich zu nutzen. Die bekannten ORC-Prozesse erfüllen diese Anforderung jedoch nur sehr bedingt, da auch vor dem Hintergrund des nachhaltigen Umgangs mit vorhandener Wärme der oben erwähnte niedrige Wirkungsgrad ein zu großer Nachteil ist.

Wie eingangs erwähnt, stellen Fertigungsprozesse, Industrieanlagen, Schornsteine, Biogasanlagen und Blockheizkraftwerke Einsatzgebiete für ORC-Prozesse dar, um die dort frei werdende Abwärme oder Restwärme zur Bereitstellung von elektrischer Energie zu nutzen. Diese Anlagen werden in den meisten Fällen mit ORC-Vorrichtungen nachgerüstet, so dass die Kompaktheit der ORC-Anlagen eine wichtige Rolle spielt. In nicht wenigen Fällen scheitert die Nachrüstung mit bekannten ORC-Vorrichtungen an Platzproblemen.
Aufgabe der vorliegenden Erfindung ist es daher, die Vorrichtung der eingangs genannten Art so weiterzuentwickeln, dass ihr Wirkungsgrad in einem Umfang erhöht wird, der es ermöglicht, die in der vorhandenen Abwärme enthaltene Energie wirtschaftlicher zu nutzen. Weiterhin soll die Vorrichtung mit wenig Bauraum auskommen und kompakt ausgestaltet sein, so dass bestehende Anlagen möglichst einfach nachgerüstet werden können.

Gelöst wird die Aufgabe dadurch, dass inter alia die eingangs genannte Vorrichtung weiterhin einen zweiten Kreislauf aufweist, in welchem ein zweites Prozessfluid durch den ersten Kondensator geführt und dort erwärmt wird, wobei der zweite Kreislauf eine stromabwärts des ersten Kondensators angeordnete zweite Fluidenergiemaschine zum Verdichten des erwärmten zweiten Prozessfluids, einen stromabwärts der zweiten Fluidenergiemaschine angeordneten Wärmetauscher zum Übertragen von Wärme vom verdichteten zweiten Prozessfluid auf das erste Prozessfluid, wobei der Wärmetauscher vom ersten Prozessfluid durchströmbar ist, und eine stromabwärts vom zweiten Kondensator angeordnete Drossel zum Drosseln des kondensierten zweiten Prozessfluids umfasst, wobei die Entspannungsmaschine getriebelos mit einer Welle mit dem Generator verbindbar ist.
Bei bislang aus dem Stand der Technik bekannten ORC-Prozessen wird dem entspannten ersten Prozessfluid zum Kondensieren dadurch Wärme entzogen, dass gegen die Umgebung gekühlt wird, beispielsweise unter Verwendung von Kühltürmen, die jedoch selbst Energie verbrauchen. Die entzogene Wärme geht ungenutzt verloren. Darüber hinaus ergeben sich insbesondere dann erhebliche negative Auswirkungen auf den Wirkungsgrad, wenn die Umgebungstemperaturen noch relativ hoch sind, beispielsweise in äquatornahen Regionen, da die Umgebungstemperaturen das untere Temperaturniveau und somit die nutzbare Temperaturdifferenz zwischen Wärmequelle und Wärmesenke festlegen. Ferner geht die Abwärme verloren, ohne dass die darin enthaltene Energie genutzt wird.

Die im ersten Kondensator stattfindende Wärmeübertragung sorgt folglich dafür, dass das erste Prozessfluid kondensiert und das zweite Prozessfluid erwärmt wird. Das zweite Prozessfluid wird innerhalb des zweiten Kreislaufes zum Wärmetauscher gefördert, der vom ersten Prozessfluid durchströmt wird. An dieser Stelle wird dem zweiten Prozessfluid Wärme entzogen, die zur Erwärmung des ersten Prozessfluids verwendet wird. Um die Wärmeübertragung zu ermöglichen, muss das zweite Prozessfluid mindestens auf den Druck, unter dem das erste Prozessfluids im Wärmetauscher steht, verdichtet werden, wozu die zweite Fluidenergiemaschine dient.

Die getriebelose Anbindung der Entspannungsmaschine an den Generator sorgt weiterhin dafür, dass der Raum für ein Getriebe eingespart werden kann, weshalb die erfindungsgemäße Vorrichtung sehr kompakt ausgestaltet werden kann und mit wenig Bauraum auskommt. Daher kann sie einfacher in bereits vorhandene Anlagen, wo Abwärme oder Restwärme genutzt werden soll, integriert werden. Darüber hinaus verursachen Getriebe Leistungsverluste, so dass die getriebelose Anordnung den Wirkungsgrad der Vorrichtung zum Durchführen des ORC-Prozesses im Vergleich zu einer Vorrichtung mit Getriebe erhöht. Getriebe sind häufig Ursachen von Störungen, da sie dem Verschleiß unterliegen. Daher hat die getriebelose Ausgestaltung zusätzlich den Vorteil, dass sie den Betrieb der erfindungsgemäßen Vorrichtung zuverlässiger macht.

Erfindungsgemäß ist weiterhin vorgesehen, dass stromabwärts der Entspannungsmaschine ein Expansionsbehälter zum Expandieren des ersten Prozessfluids angeordnet ist. Beim Austritt aus der Entspannungsmaschine liegt das Prozessfluid bei ORC-Prozessen ganz oder zum größten Teil in flüssiger Form vor. Wird das Prozessfluid direkt in Rohrleitungen des ersten Kreislaufs geführt, die einen relativ geringen Rohrdurchmesser aufweisen, so kann ein Gegendruck in der Entspannungsmaschine entstehen, der sich negativ auf den Wirkungsgrad der Entspannungsmaschine auswirkt. Der Expansionsbehälter sorgt dafür, dass ein Expansionsvolumen vorhanden ist, wodurch der Gegendruck abgebaut werden kann, ohne dass er in die Entspannungsmaschine zurück reicht, so dass der Wirkungsgrad der Entspannungsmaschine durch den Gegendruck nicht negativ beeinflusst wird.

Erfindungsgemäß weist der Expansionsbehälter eine Expansionsbehälter-Kühleinheit auf. Wie bereits oben ausgeführt, kann nicht ausgeschlossen werden, dass das Prozessfluid nach Verlassen der Entspannungsmaschine vollständig kondensiert wird und sich Teile des Prozessfluids im gasförmigen Zustand befinden. Durch die Kühlung des Expansionsbehälters wird erreicht, dass das Prozessfluid weiter kondensieren kann und folglich zumindest in größerem Umfang im flüssigen Zustand vorliegt.

In einer bevorzugten Weiterbildung umfasst die Lagerung der Welle eine Tandem-Wälzlageranordnung. Üblicherweise werden zur Lagerung der Welle zwei, in einem bestimmten Abstand angeordnete Lager verwendet, beispielsweise mit Radiallagern. Zudem muss die Welle auch axial gelagert werden. Bei einer getriebelosen Verbindung zwischen Turbine und Generator ist es nicht möglich, die Drehgeschwindigkeiten, die von der Turbine abgegeben werden, auf die optimalen Drehgeschwindigkeiten des Generators zu über- oder untersetzen. Die beim ORC-Prozess eingesetzten Turbinen laufen üblicherweise mit einer sehr hohen Drehgeschwindigkeit, wobei 60 000 U min⁻¹ durchaus keine Seltenheit sind. Neben dem Rotor des Generators ist zusätzlich noch das Laufrad der Turbine der auf derselben Welle angeordnet, wobei letztere vorzugsweise fliegend gelagert ist, weshalb es zu einer hohen mechanischen und thermischen Belastung der Lager kommt. Bei bekannten ORC-Anlagen werden deshalb mit Magnet- oder Luftlagern ausgestattet. Magnetlager sind teuer und verbrauchen zudem noch Strom, was zu einer Reduzierung des gesamten Wirkungsgrads der ORC-Anlage führt. Luftlager haben den Nachteil, dass das Luftpolster, auf dem die Welle gelagert ist, relativ instabil ist. Bricht das Luftpolster zusammen, nimmt die ORC-Anlage großen Schaden der nicht oder nur mit großen Aufwand zu beheben ist. Diesen Nachteilen kann mit einer Tandem-Wälzlageranordnung begegnet werden. Unter einer Tandem-Lageranordnung versteht man eine Lageranordnung, bei der mindestens ein Lager durch ein zwei- oder mehrreihiges Lager ersetzt wird. Mit zwei Wälzlagereinheiten kann die Welle sowohl radial als auch axial gelagert werden, gleichzeitig sin die Anschaffungskosten insbesondere gegenüber Magnetlagern deutlich geringer und der Wirkungsgrad wird nicht durch den Stromverbrauch verringert. Mit Tandem-Wälzlageranordnungen können Lagerschäden im Vergleich zu herkömmlichen Wälzlagern vermindert werden, so dass die ORC-Anlage verlässlicher betrieben werden kann, da die Tandem-Wälzlageranordnung insbesondere den auftretenden thermischen und mechanischen Belastungen besser widerstehen kann. Zudem hat die Tandem-Wälzlageranordnung den weiteren Vorteil, dass sie mit einem geringeren radialen Bauraum auskommt, was die kompakte Konstruktion der Turbine und des Generators begünstigt. Zudem lässt sich mit der Tandem-Wälzlageranordnung eine wartungsfreie Lagerung realisieren, deren Schmierfette nicht ersetzt werden müssen, was den Wartungsaufwand senkt.

In einer bevorzugten Weiterbildung ist die Entspannungsmaschine als eine Turbine ausgebildet und umfasst ein Turbinengehäuse, welches an einem Generatorgehäuse des Generators befestigbar ist. Die Ausgestaltung der Entspannungsmaschine als Turbine ist die Ausgestaltung der Wahl, wenn man einen ORC-Kreislauf betreiben will. Die Zusammenfassung der Turbine mit dem Generator zu einer Baueinheit reduziert den Platzbedarf, so dass eine sehr kompakte Baueinheit entsteht, die gut in bestehende Anlagen integriert werden kann.

Vorzugsweise weist die Turbine ein erstes Laufrad mit einer Anzahl von ersten Laufradschaufeln auf, welches auf der Welle angeordnet ist, auf der ein Rotor des Generators angebracht ist. Das Laufrad versetzt die Welle im Betrieb des ORC-Prozesses in Drehung, die ohne Zwischenschaltung weiterer Bauteile den Rotor des Generators in Drehung versetzt, wodurch elektrische Energie erzeugt wird. Die Turbine und der Generator sind dabei vorzugsweise so aufeinander abgestimmt, dass mit den üblicherweise zu erwartenden Umdrehungsgeschwindigkeiten der Turbine der Generator optimal betrieben werden kann. Die Anzahl der Bauteile wird reduziert, wodurch der Platzbedarf reduziert und die Verlässlichkeit der Vorrichtung erhöht wird.

In einer bevorzugten Ausbildung weist die Turbine ein erstes Leitrad mit einer Anzahl von ersten Leitradschaufeln und ein erstes Laufrad mit einer Anzahl von ersten Laufradschaufeln auf. Unter anderem aufgrund des Wunsches, die erfindungsgemäße Vorrichtung möglichst kompakt auszuführen, hat sich eine radial angeströmte Turbine als vorteilhaft erwiesen. Die Leitradschaufeln sorgen dafür, dass das Prozessfluid möglichst optimal die Laufradschaufeln anströmt. Hierdurch werden Verbesserungen des Wirkungsgrads erreicht, so dass die erfindungsgemäße Vorrichtung insgesamt effektiver betrieben werden kann.

Eine Weiterbildung der erfindungsgemäßen Vorrichtung zeichnet sich dadurch aus, dass die Turbine ein zweites Laufrad und ein zweites Leitrad mit einer Anzahl von Rückführschaufeln und einer Anzahl von zweiten Laufradschaufeln aufweist. Denkbar ist ein Strömungsverlauf, bei dem das Prozessfluid radial außen in die Turbine einströmt, von den ersten Leitradschaufeln auf die ersten Laufradschaufeln des ersten Laufrades gelenkt wird und durch den von den Laufradschaufeln vorgegebenen Kanal radial nach innen strömt. Anschließend strömt das Prozessfluid axial bis zum zweiten Leitrad, wo es von den auf der stromaufwärts gelegenen Seite angeordneten Rückführschaufeln wieder radial nach außen gelenkt wird. Auf der stromabwärts gelegenen Seite des zweiten Leitrads wird das Prozessfluid von den zweiten Leitradschaufeln auf die zweiten Laufradschaufeln des zweiten Laufrads gelenkt, wodurch das zweite Laufrad in Drehung versetzt wird. Es wird somit eine zweistufige Turbine verwirklicht, wodurch der Wirkungsgrad der erfindungsgemäßen Vorrichtung nochmals erhöht wird. Selbstverständlich können nicht nur eine zweistufige Turbinen realisiert werden, sondern auch drei- oder mehrstufige Turbinen.

Vorzugsweise weist das Generatorgehäuse eine Generator-Kühleinheit auf. Es hat sich herausgestellt, dass durch eine Kühlung des Generatorgehäuses eine Vielzahl von Vorteilen erreicht werden kann. Die wichtigsten sind, dass die thermischen Belastungen des Rotors und des Stators im Betrieb des Generators verringert werden, wodurch die Lebensdauer des Generators erhöht wird. Weiterhin kann die Drehzahl des Generators erhöht werden, so dass ein besserer Wirkungsgrad erzielt werden kann. Zudem ist das Magnetfeld temperaturabhängig und sinkt mit steigender Temperatur. Die Generator-Kühleinheit bewirkt somit, dass ein starkes Magnetfeld aufrecht erhalten wird, wodurch der Wirkungsgrad des Generators ebenfalls gesteigert bzw. auf hohem Niveau gehalten wird.

Ebenfalls ist es bevorzugt, dass das Turbinengehäuse eine Turbinen-Kühleinheit aufweist. Auch in diesem Fall werden thermische Belastungen der Komponenten der Turbine reduziert, weshalb die Lebensdauer der Turbine erhöht wird. Je nach Konstruktion kann die Kühleinheit insbesondere die Lageranordnung der Welle kühlen, was eine entscheidende Verbesserung der Zuverlässigkeit der Turbine mit sich bringt.

Die erfindungsgemäße Vorrichtung wird durch einen oder mehrere weitere Kreisläufe weitergebildet, in welchen jeweils ein weiteres Prozessfluid geführt wird, welches oder welche durch einen oder mehrere erste Wärmetauscher, die vom ersten Prozessfluid durchströmbar sind, erwärmt werden. Hierbei umfassen der oder die weiteren Kreisläufe jeweils eine stromabwärts des ersten Wärmetauschers angeordnete weitere Fluidenergiemaschine zum Verdichten des oder der erwärmten weiteren Prozessfluide, jeweils einen stromabwärts der weiteren Fluidenergiemaschine angeordneten zweiten Wärmetauscher zum Übertragen von Wärme von dem oder den verdichteten weiteren Prozessfluiden auf das erste Prozessfluid, wobei der zweite Wärmetauscher vom ersten Prozessfluid durchströmbar ist, und jeweils eine stromabwärts vom zweiten Wärmetauscher angeordnete weitere Drossel zum Drosseln des oder der kondensierten weiteren Prozessfluide. Bei der Kondensation des ersten Prozessfluids im ersten Kondensator kann dem ersten Prozessfluid nur eine bestimmte Wärmemenge entzogen werden. Diese ist unter anderem durch die thermodynamischen Eigenschaften des zweiten Prozessfluids begrenzt. Insofern kann das erste Prozessfluid immer noch eine bestimmte Wärmemenge enthalten, die sich je nach Anwendungsfall noch deutlich über dem Temperaturniveau der Umgebung befinden kann. Diese Wärmemenge kann dadurch genutzt werden, dass das dritte Prozessfluid verdampft wird, wobei die dabei auf das Prozessfluid übertragene Wärme an einer geeigneten Stelle dem ersten Prozessfluid wieder zugeführt wird. Zu beachten hierbei ist, dass das Prozessfluid, welches die Wärme abgibt, mindestens unter dem gleichen Druck steht wie das aufnehmende Prozessfluid. Als unmittelbare Folge davon muss die weitere Fluidenergiemaschine das dritte Prozessfluid vor dem Eintritt in den zweiten Wärmetauscher auf mindestens den Druck verdichten, unter welchem das erste Prozessfluid im zweiten Wärmetauscher steht. Infolgedessen lässt sich der Wirkungsgrad des ORC-Prozesses weiter steigern.

Vorzugsweise ist die Generator-Kühleinheit vom zweiten Prozessfluid oder vom weiteren Prozessfluid durchströmbar. In dieser Ausgestaltung wird die Wärme, die dem Generator bei der Kühlung entzogen wird, dem ersten Prozessfluid wieder an geeigneter Stelle zugeführt, so dass die entzogene Wärme nicht ungenutzt bleibt, sondern dem Prozess weiter zur Verfügung steht. Somit lässt sich der Wirkungsgrad der Vorrichtung weiter steigern.

In einer weiteren Ausbildung weist die Vorrichtung einen ersten weiteren Kreislauf auf, in welchem ein erstes weiteres Prozessfluid geführt wird, welches durch die Generator-Kühleinheit strömt und dabei erwärmt wird, wobei der erste weitere Kreislauf jeweils eine stromabwärts der Generator-Kühleinheit angeordnete weitere Fluidenergiemaschine zum Verdichten des erwärmten ersten weiteren Prozessfluids, jeweils einen stromabwärts der weiteren Fluidenergiemaschine angeordneten zweiten Wärmetauscher zum Übertragen von Wärme vom verdichteten ersten weiteren Prozessfluid auf das erste Prozessfluid, wobei der zweite Wärmetauscher vom ersten Prozessfluid durchströmbar ist, und jeweils eine stromabwärts vom zweiten Wärmetauscher angeordnete weitere Drossel zum Drosseln des kondensierten ersten weiteren Prozessfluids umfasst.

In dieser Ausbildung kann die Wärme, die im Betrieb des Generators entsteht, aus dem Generator abgeführt und auf das erste Prozessfluid übertragen werden. Wie bereits oben ausgeführt, sinkt der Wirkungsgrad des Generators mit steigender Temperatur, so dass eine Kühlung ohnehin sinnvoll ist. In dieser Ausbildung kann die vom Generator abgeführte Wärme zur Vorwärmung des ersten Prozessfluids verwendet werden, so dass der ORC-Kreislauf insgesamt mit einem höheren Wirkungsgrad betrieben werden kann.

Eine weitere Ausführungsform der erfindungsgemäßen Vorrichtung umfasst einen ersten weiteren Kreislauf, in welchem ein erstes weiteres Prozessfluid geführt wird, welches durch eine Wärmeübertragungseinrichtung strömt und dabei erwärmt wird, wobei der erste weitere Kreislauf jeweils eine stromabwärts der Wärmeübertragungseinrichtung angeordnete weitere Fluidenergiemaschine zum Verdichten des erwärmten ersten weiteren Prozessfluids, jeweils einen stromabwärts der weiteren Fluidenergiemaschine angeordneten zweiten Wärmetauscher zum Übertragen von Wärme vom verdichteten ersten weiteren Prozessfluid auf das erste Prozessfluid, wobei der zweite Wärmetauscher vom ersten Prozessfluid durchströmbar ist, und jeweils eine stromabwärts vom zweiten Wärmetauscher angeordnete weitere Drossel zum Drosseln des kondensierten ersten weiteren Prozessfluids umfasst, wobei ein zweiter weiterer Kreislauf vorgesehen ist, in welchem ein zweites weiteres Prozessfluid geführt wird, welches die Generator-Kühleinheit und die Wärmeübertragungseinrichtung durchströmt.

Generell hat es sich als vorteilhaft herausgestellt, wenn das zweite und das oder die weiteren Prozessfluide nur in genau einem Verdampfer verdampft und in nur genau einem Kondensator kondensiert werden. Dies führt aber zu einer Zunahme der benötigten Komponenten und der Leitungen, da keine weiteren Wärmetauscher in den jeweiligen Kreislauf integriert werden können. Zwar ist es generell vorteilhaft, innerhalb eines Kreislaufs dem zweiten oder einem der weiteren Prozessfluide mittels mehrerer Wärmetauscher mehrmals Wärme zuzuführen, insbesondere dann, wenn die zur Verdampfung benötigte Wärmemenge an einer Stelle dem ersten Prozessfluid entnommen wird, wo die zur Verdampfung benötigte Wärmemenge nicht übertragen werden kann. Im zweiten, stromabwärts des ersten Wärmetauschers angeordneten zweiten Wärmetauschers besteht dann jedoch die Gefahr, dass das zweite oder eines der weiteren Prozessfluide teilweise schon verdampft ist und ein Gas-Flüssigkeitsgemisch vorliegt. Je nach Gestaltung der Generator-Kühleinheit können kleine Kanäle vorhanden sein, die vom verwendeten Prozessfluid durchströmt werden müssen. Der Dampf jedoch kann die Kanäle blockieren, so dass die Durchströmung erschwert wird. Diesem Problem kann dadurch begegnet werden, dass ein weiterer Kreislauf in einen ersten und einen zweiten weiteren Kreislauf unterteilt wird und es so möglich ist, verschiedene weitere Prozessfluide zu verwenden, die so ausgewählt werden, dass das betreffende weitere Prozessfluid die Generator-Kühleinheit nur im flüssigen Zustand durchströmt.

Ebenfalls ist es bevorzugt, dass die Turbinen-Kühleinheit vom zweiten Prozessfluid oder vom weiteren Prozessfluid oder vom ersten weiteren Prozessfluid durchströmbar ist. In dieser Ausgestaltung wird die Wärme, die der Turbine bei der Kühlung entzogen wird, dem ersten Prozessfluid wieder an geeigneter Stelle zugeführt, so dass die entzogene Wärme nicht ungenutzt bleibt, sondern dem Prozess weiter zur Verfügung steht. Somit lässt sich der Wirkungsgrad der Vorrichtung weiter steigern.

In einer weiteren Fortbildung der Erfindung ist die Expansionsbehälter-Kühleinheit vom zweiten Prozessfluid oder vom weiteren Prozessfluid oder vom ersten weiteren Prozessfluid durchströmbar. In dieser Ausgestaltung wird die Wärme, die dem Expansionsbehälter bei der Kühlung entzogen wird, dem ersten Prozessfluid wieder an geeigneter Stelle zugeführt, so dass die entzogene Wärme nicht ungenutzt bleibt, sondern dem Prozess weiter zur Verfügung steht. Somit lässt sich der Wirkungsgrad der Vorrichtung weiter steigern.

Ein weiterer Aspekt der vorliegenden Erfindung betrifft eine Turbinen-Generator-Anordnung zur Verwendung in einem ORC-Kreislauf, umfassend eine Turbine mit einem Turbinengehäuse, und einen Generator mit einem Generatorgehäuse, wobei das Generatorgehäuse mit einer Welle getriebelos am Turbinengehäuse befestigbar ist. Dieser Aspekt betrifft somit auch die Verwendung einer Turbinen-Generator-Anordnung zum Ausführen eines ORC-Kreislaufs. Die technischen Effekte und Vorteile dieser Turbinen-Generator-Anordnung entsprechen denjenigen, die für die Vorrichtung beschrieben worden sind. Insbesondere seien der reduzierte Bauraum und die erhöhte Zuverlässigkeit genannt. Bevorzugt umfasst die Lagerung der Welle der Turbinen-Generator-Anordnung eine Tandem-Wälzlageranordnung. Die technischen Effekte und Vorteile dieser Turbinen-Generator-Anordnung entsprechen denjenigen, die für die entsprechende Ausbildung der erfindungsgemäßen Vorrichtung beschrieben worden sind.

Vorzugsweise weist die Turbine der Turbinen-Generator-Anordnung ein erstes Laufrad mit einer Anzahl von ersten Laufradschaufeln auf, welches auf einer Welle angeordnet ist, auf welcher ein Rotor des Generators angebracht ist. Die technischen Effekte und Vorteile dieser Turbinen-Generator-Anordnung entsprechen denjenigen, die für die entsprechende Ausbildung der erfindungsgemäßen Vorrichtung beschrieben worden sind.

In einer Weiterbildung der Turbinen-Generator-Anordnung weist die Turbine ein Leitrad mit einer Anzahl von Leitradschaufeln auf. Die technischen Effekte und Vorteile dieser Turbinen-Generator-Anordnung entsprechen denjenigen, die für die entsprechende Ausbildung der erfindungsgemäßen Vorrichtung beschrieben worden sind.

Die Turbinen-Generator-Anordnung wird dadurch fortgebildet, dass das Generatorgehäuse eine Generator-Kühleinheit und/oder dass das Turbinengehäuse eine Turbinen-Kühleinheit aufweist. Die technischen Effekte und Vorteile dieser Turbinen-Generator-Anordnung entsprechen denjenigen, die für die entsprechende Ausbildung der erfindungsgemäßen Vorrichtung beschrieben worden sind.

Die Erfindung wird im Folgenden unter Bezugnahme auf die anhängenden Zeichnungen anhand von bevorzugten Ausführungsbeispielen im Detail erläutert. Es zeigen
- Figur 1: eine Vorrichtung zum Durchführen eines ORC-Prozesses,
- Figur 2: ein erstes Ausführungsbeispiel der erfindungsgemäßen Vorrichtung,
- Figur 3: ein zweites Ausführungsbeispiel der erfindungsgemäßen Vorrichtung, jeweils anhand einer Prinzipskizze,
- Figur 4: eine erfindungsgemäße Turbinen-Generator-Anordnung anhand einer Schnittdarstellung,
- Figur 5a): ein erfindungsgemäßes Laufrad anhand einer Draufsicht,
- Figur 5b): das in Figur 5a) dargestellte Laufrad anhand einer Schnittdarstellung entlang der in Figur 5a) definierten Schnittebene,
- Figur 6a): ein erfindungsgemäßes erstes Leitrad anhand einer Draufsicht,
- Figur 6b): das in Figur 6a) gezeigte erste Leitrad anhand einer perspektivischen Darstellung
- Figur 6c): das in den Figuren 6a) und 6b) gezeigte erste Leitrad anhand einer perspektivischen Darstellung,
- Figur 7a): ein erfindungsgemäßes zweites Leitrad anhand einer Draufsicht,
- Figur 7b): das in Figur 7a) gezeigte zweite Leitrad anhand Seitenansicht,
- Figur 7c): das in den Figuren 7a) und 7b) gezeigte Leitrad anhand einer perspektivischen Darstellung.

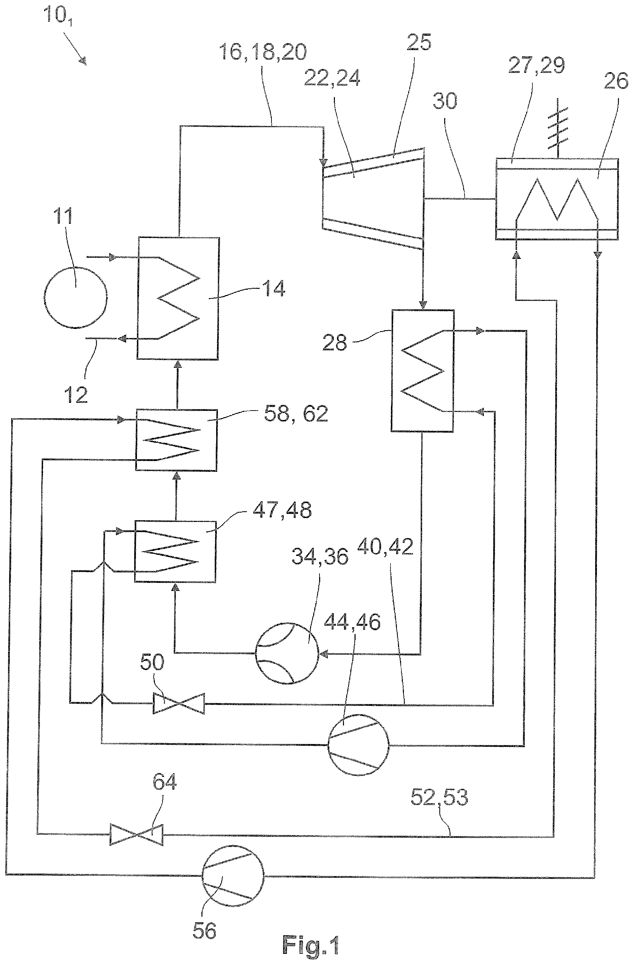

In Figur 1 ist eine Vorrichtung 10₁ zum Ausführen eines ORC-Prozesses anhand einer schematischen Darstellung gezeigt. Eine Wärmequelle 11, beispielsweise eine Industrieanlage, stellt Abwärme bereit, die mittels eines geeigneten Trägermediums 12 einem Verdampfer 14 zugeführt wird. Der Verdampfer 14 ist Teil eines ersten Kreislaufs 16, in welchem ein erstes Prozessfluid 18 geführt wird. Die Förderrichtung des ersten Prozessfluids 18 ist mit den Pfeilen gekennzeichnet. Die Verwendung der Begriffe "stromaufwärts" und "stromabwärts" bezieht sich auf die Förderrichtung der jeweiligen Prozessfluide in den betreffenden Kreisläufen. Im Verdampfer 14 wird das erste Prozessfluid 18 mittels der von der Wärmequelle 11 gelieferten Wärme verdampft. Der Verdampfer 14 ist über geeignete Leitungen 20 mit einer Entspannungsmaschine 22 verbunden, in der das im Verdampfer 14 verdampfte erste Prozessfluid 18 entspannt wird. Die Entspannungsmaschine 22 ist im dargestellten Beispiel als Turbine 24 mit einem Turbinengehäuse 25 ausgeführt und getriebelos über eine Welle 30 mit einem Generator 26 verbunden, in welchem die von der Turbine 24 erzeugte mechanische Energie in elektrische Energie umgewandelt wird. Der Generator 26 weist ein Generatorgehäuse 27 auf, welches am Turbinengehäuse 25 befestigbar ist.
Nach Durchströmen der Turbine 24 wird das entspannte erste Prozessfluid 18 einem ersten Kondensator 28 zugeführt, in welchem das entspannte erste Prozessfluid 18 kondensiert wird. Hierzu muss dem ersten Prozessfluid 18 Wärme entzogen werden, was durch einen zweiten Kreislauf 40 erfolgt, in welchem ein zweites Prozessfluid 42 in Richtung der Pfeile geführt wird, wie im Folgenden noch näher erläutert wird.

Nach Verlassen des Kondensators 28 wird das kondensierte erste Prozessfluid 18 einer ersten Fluidenergiemaschine 34 zugeführt, die einerseits das erste Prozessfluid 18 im ersten Kreislauf 16 fördert, andererseits jedoch eine Druckerhöhung des ersten Prozessfluids 18 bewirkt. Im dargestellten Beispiel ist die erste Fluidenergiemaschine 34 als Pumpe 36 ausgeführt, die zum Fördern des flüssigen ersten Prozessfluids 18 besonders geeignet ist. Anschließend wird das erste Prozessfluid 18 dem Verdampfer 14 zugeführt, wodurch der erste Kreislauf 16 geschlossen wird.

Das zweite Prozessfluid 42 durchströmt den ersten Kondensator 28, in welchem es durch die vom ersten Prozessfluid 18 abgegebene Wärme erwärmt oder verdampft wird. Anschließend wird das erwärmte oder verdampfte zweite Prozessfluid 42 einer zweiten Fluidenergiemaschine 44, die im dargestellten Beispiel als Verdichter 46 ausgeführt ist, zugeführt, die einerseits das zweite Prozessfluid 42 im zweiten Kreislauf 40 fördert, andererseits jedoch eine Verdichtung des erwärmten oder verdampften zweiten Prozessfluids 42 bewirkt. Anschließend wird das zweite Prozessfluid 42 einem Wärmetauscher 47 zugeführt, der vom ersten Prozessfluid 18 durchströmt wird. Wird das zweite Prozessfluid 42 im ersten Kondensator 28 verdampft, ist der Wärmetauscher als ein zweiter Kondensator 48 ausgeführt, in welchem das zweite Prozessfluid 42 kondensiert wird. In beiden Fällen wird die hierbei dem zweiten Prozessfluid 42 entzogene Wärme dem ersten Prozessfluid 18 zugeführt.

Im dargestellten Beispiel ist der zweite Kondensator 48 stromaufwärts vom Verdampfer 14 angeordnet, so dass das erste Prozessfluid 18 vor Eintritt in den Verdampfer 14 im zweiten Kondensator 48 vorgewärmt wird. Hierdurch wird die zum Verdampfen des ersten Prozessfluids benötigte Wärmemenge entsprechend reduziert, so dass der ORC-Prozess auch mit einer Wärmequelle 11 ausgeführt werden kann, deren Abwärme ein relativ geringes Temperaturniveau aufweist. Nach Verlassen des zweiten Kondensators 48 wird das zweite Prozessfluid 42 einer Drossel 50 zugeführt, wo es gedrosselt und sein Druck verringert wird. Anschließend wird das zweite Prozessfluid 42 dem ersten Kondensator 28 zugeführt, wodurch der zweite Kreislauf 40 geschlossen wird.

Weiterhin umfasst die Vorrichtung 10₁ noch einen weiteren Kreislauf 52, in diesem Fall einen dritten Kreislauf 52, auf, in welchem ein weiteres Prozessfluid 53, in diesem Fall ein drittes Prozessfluid 53, von einer weiteren Fluidenergiemaschine 56 geführt, die das dritte Prozessfluid 53 im dritten Kreislauf 52 fördert. Das dritte Prozessfluid 53 wird durch eine Generator-Kühleinheit 29 im Generatorgehäuse 27 geleitet, wodurch Wärme vom Generator 26 auf das weitere Prozessfluid 53 übertragen und der Generator 26 gekühlt wird. Dabei wird das dritte Prozessfluid 53 erwärmt oder verdampft. Stromabwärts der Generator-Kühleinheit 29 wird das dritte Prozessfluid 53 durch einen zweiten Wärmetauscher 58 oder einem vierten Kondensator 62 zugeführt, der vom ersten Prozessfluid 18 durchströmbar ist. Hier wird Wärme vom dritten Prozessfluid 53 auf das erste Prozessfluid 18 übertragen, wobei die weitere Fluidenergiemaschine 56 das dritte Prozessfluid 53 mindestens auf den Druck, unter den das erste Prozessfluids 18 im zweiten Wärmetauscher 58 steht, verdichtet. Der zweite Wärmetauscher 58 ist stromabwärts des zweiten Kondensators 48 angeordnet und bewirkt, dass Wärme vom dritten Prozessfluid 53 auf das erste Prozessfluid 18 übertragen wird. Anschließend wird das dritte Prozessfluid 53 in einer weiteren Drossel 64 auf einen Druck gedrosselt, sofern dies notwendig ist. Durch den thermischen Prozess, der im dritten Kreislauf 52 durchgeführt wird, wird das erste Prozessfluid 18 bereits etwas vorwärmt, bevor es in den Verdampfer 14 gelangt, wodurch im Endeffekt bewirkt wird, dass die zur Verdampfung benötigte Wärmemenge weiter reduziert wird. Infolgedessen bewirkt die erfindungsgemäße Ausgestaltung der Vorrichtung 10₂ eine weitere Verbesserung des Wirkungsgrads des ORC-Prozesses.

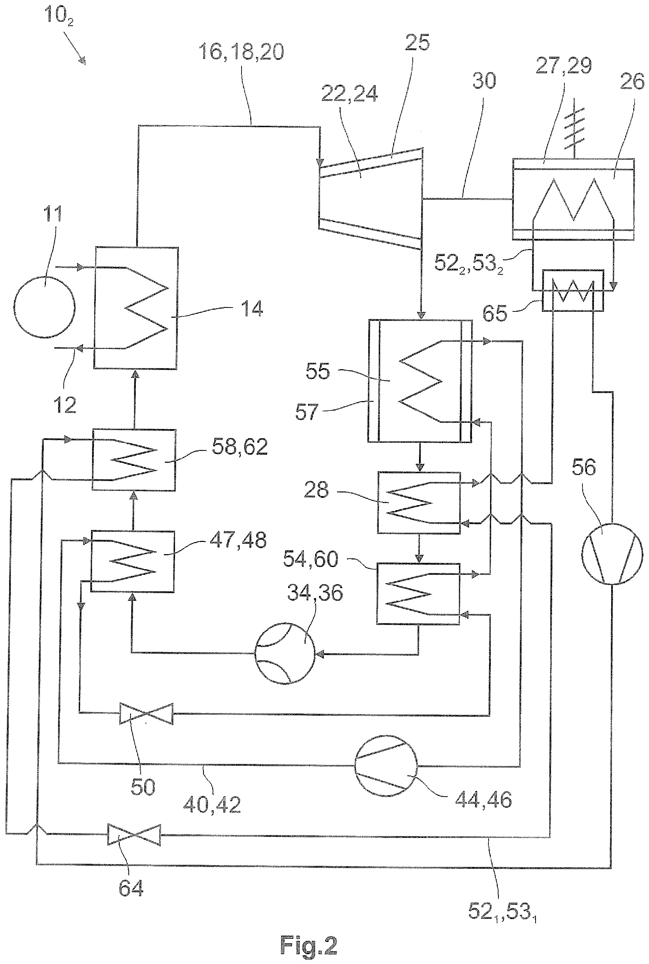

In Figur 2 ist ein erstes Ausführungsbeispiel der erfindungsgemäßen Vorrichtung 10₂ zum Durchführen eines ORC-Prozesses dargestellt. In diesem Ausführungsbeispiel umfasst die Vorrichtung 10₂ sämtliche Komponenten der Vorrichtung 10₁ nach Figur 1, weist jedoch zusätzlich noch einen vom ersten Prozessfluid 18 durchströmbaren Expansionsbehälter 55 mit einer Expansionsbehälter-Kühleinheit 57 auf, wobei der Expansionsbehälter 55 stromabwärts der Turbine 24 angeordnet ist und der einen Rückstau des entspannten ersten Prozessfluids 18 in die Turbine 24 verhindert. Stromabwärts vom Expansionsbehälter 55 ist der erste Kondensator 28 angeordnet. Weiterhin ist im ersten Kreislauf 16 ein erster Wärmetauscher 54 vorgesehen, der stromabwärts vom ersten Kondensator 28 angeordnet ist und der vom ersten Prozessfluid 18 durchströmbar ist.
Sowohl der erste Wärmetauscher 54 als auch die Expansionsbehälter-Kühleinheit 57 sind vom zweiten Prozessfluid 42 durchströmbar, das im zweiten Kreislauf 40 geführt wird. Die im ersten Wärmetauscher 54 und in der Expansionsbehälter-Kühleinheit 57 dem ersten Prozessfluid 18 entzogene Wärme wird dem ersten Prozessfluid 18 im Wärmetauscher 47 wieder zugeführt, der je nach zur Verfügung stehender Wärmemenge und verwendetem zweiten Prozessfluid auch als der zweite Kondensator 48 ausgeführt sein kann.

Im ersten Ausführungsbeispiel 10₂ wird der Verdampfer 28 von einem ersten weiteren Prozessfluid 53₁ durchströmt, das in einem ersten weiteren Kreislauf 52₁ geführt wird, wozu wiederum die weitere Fluidenergiemaschine 56 verwendet wird. Stromabwärts des Verdampfers 28 ist eine Wärmeübertragungseinrichtung 65 vorgesehen, die vom ersten weiteren Prozessfluid 52₁ durchströmbar ist. Gleichzeitig wird die Wärmeübertragungseinrichtung 65 auch von einem zweiten weiteren Prozessfluid 53₂ durchströmt, welches in einem zweiten weiteren Kreislauf 52₂ geführt wird. Auf die Darstellung einer entsprechenden Fördereinrichtung im zweiten weiteren Kreislauf 52₂ wurde der Übersichtlichkeit halber verzichtet. Das zweite weitere Prozessfluid 53₂ durchströmt auch die Generator-Kühleinheit 29, so dass die Wärme, die beim Kühlen des Generators 26 auf das zweite weitere Prozessfluid 53₂ übertragen wird, in der Wärmeübertragungseinrichtung 65 auf das erste weitere Prozessfluid 53₁ übertragen wird. Wie bereits für die Vorrichtung 10₁ nach Fig.1 geschildert, wird diese Wärme im zweiten Wärmetauscher 58 auf das erste Prozessfluid 18 übertragen. Die Wahl des zweiten weiteren Prozessfluids 53₂ kann an die Strömungs- und Temperaturverhältnisse in der Generator-Kühleinheit 29 angepasst werden.
Je nachdem, ob die Wärmemenge, die im ersten Prozessfluid 18 nach Verlassen des ersten Kondensator 28 noch verbleibt, groß genug ist, um das verwendete zweite Prozessfluid 42 zu verdampfen, ist der erste Wärmetauscher 54 als ein dritter Kondensator 60 ausgestaltet, in welchem das erste Prozessfluid 18 kondensiert und das zweite Prozessfluid 42 erwärmt wird. Entsprechend ist der zweite Wärmetauscher 58 als vierter Kondensator 62 ausgestaltet, in welchem das erste weitere Prozessfluid 53₁ kondensiert und das erste Prozessfluid 18 entsprechend erwärmt wird. In diesem Fall wird das erste weitere Prozessfluid 53₁ nach Verlassen des vierten Kondensators 62 der weiteren Drossel 64 zugeführt, wo es gedrosselt und der Druck verringert wird.

Die Vorrichtung 10₂ gemäß dem ersten Ausführungsbeispiel ist mit insgesamt vier Kreisläufen ausgestattet. An dieser Stelle sei jedoch erwähnt, dass die Anzahl der Kreisläufe beliebig erweitert werden kann. Weiterhin wird darauf hingewiesen, dass es sich sowohl bei den Verdampfern und den Kondensatoren um speziell ausgebildete Wärmetauschern handelt, bei denen der Aggregatszustand der behandelten Prozessfluide geändert wird. Es kann aber genauso gut auf eine Änderung des Aggregatszustands verzichtet werden, so dass aus den Verdampfern und Kondensatoren reine Wärmetauscher werden.

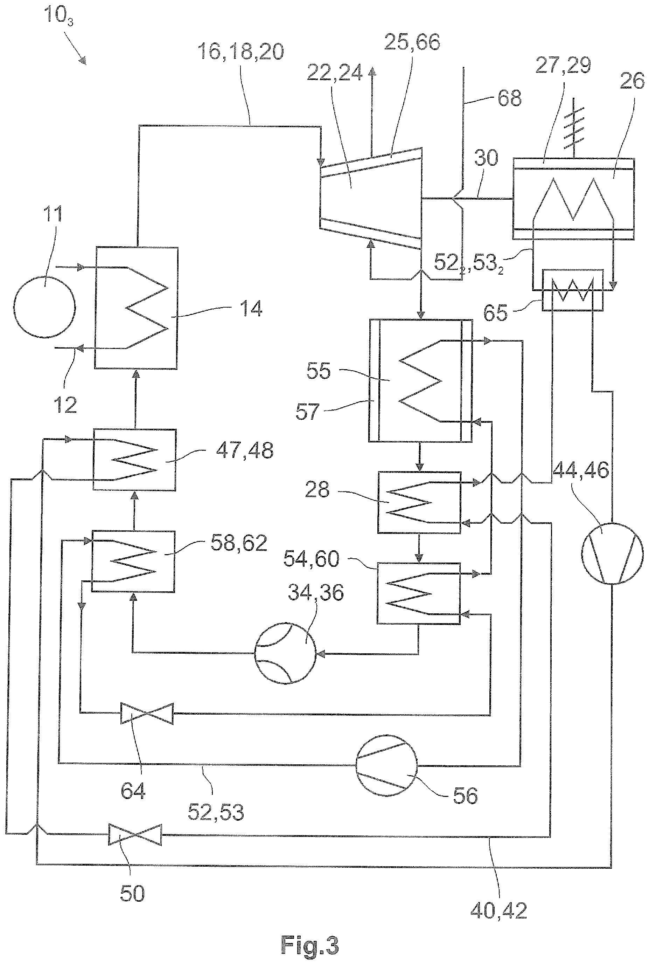

In Figur 3 ist ein zweites Ausführungsbeispiel der erfindungsgemäßen Vorrichtung 10₃ dargestellt. Es entspricht weitgehend dem ersten Ausführungsbeispiel, allerdings weist hier die Turbine 24 eine Turbinen-Kühleinheit 66 auf, mit welcher die Turbine 24 gekühlt werden kann. Im zweiten Ausführungsbeispiel wird die Turbinen-Kühleinheit 66 von einem Kühlmittel durchflossen und die Turbine 24 gekühlt, wobei das Kühlmittel nicht im zweiten Kreislauf 40 oder im weiteren Kreislauf 52 geführt wird, was aber ebenfalls denkbar wäre. In diesem Fall wäre die Turbinen-Kühleinheit 66 vom zweiten oder weiteren Prozessfluid 42, 53 durchströmbar. In den dargestellten Ausführungsbeispielen ist der Expansionsbehälter 55 vom ersten weiteren Prozessfluid 53₁ durchströmbar, wobei aber genauso gut denkbar wäre, dass die Expansionsbehälter-Kühleinheit 57 des Expansionsbehälters 55 vom zweiten Prozessfluid 42 durchströmbar ist oder gar nicht in den zweiten Kreislauf 40 oder den weiteren Kreislauf 52 integriert ist. Analoges gilt auch für die Generator-Kühleinheit 29.

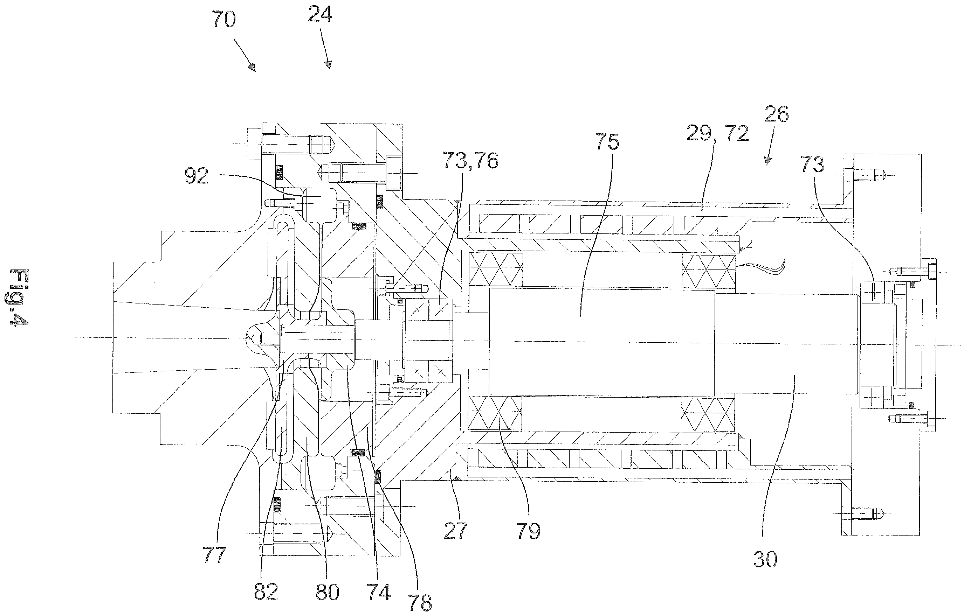

In Figur 4 ist eine erfindungsgemäße Turbinen-Generator-Anordnung 70 gezeigt, welche die Turbine 24 mit dem Turbinengehäuse 25 und den Generator 26 mit dem Generatorgehäuse 27 umfasst. Im Generatorgehäuse 27 verlaufen Kanäle 72, die zur Generator-Kühleinheit 29 gehören und durch welche das zweite Prozessfluid 42, das weitere Prozessfluid 53 oder ein Kühlmittel 68 geführt werden können, um den Generator 26 zu kühlen. Die Turbine 24 und der Generator 26 sind getriebelos miteinander verbunden, wobei auf der Welle 30 ein erstes Laufrad 74, ein zweites Laufrad 77 und ein Rotor 75 angeordnet sind, der mit einem Stator 79 des Generators 26 zusammenwirkt. Weiterhin sind am Turbinengehäuse 25 ein erstes Leitrad 78 und ein Zwischenstück 80 befestigt. Zudem ist auf der Welle 30 ein zweites Leitrad 82 befestigt. Die Welle 30 ist mittels einer Lagerung 73 gelagert, die eine Tandem-Wälzlageranordnung 76 aufweist, welche turbinenseitig zwei Lager umfasst. Somit ist es möglich, die Lauf- und Leiträder der Turbine 24 fliegend zu lagern.

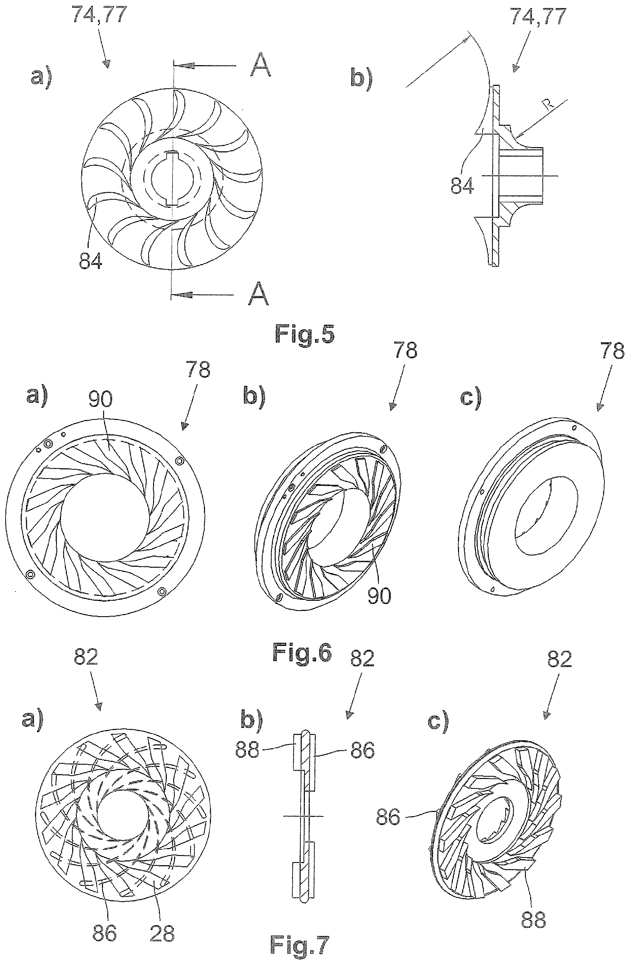

In den Figuren 5a) und 5b) ist das erfindungsgemäße erste Laufrad 74 dargestellt, welches insgesamt dreizehn erste Laufradschaufeln 84 aufweist. Das zweite Laufrad 77 ist prinzipiell genauso ausgestaltete wie das erste Laufrad 74, so dass die Figuren 5a) und 5b) ebenfalls zur Darstellung des zweiten Laufrads 77 herangezogen werden können. Entsprechend gelten die Bezugszeichen der ersten Laufradschaufeln 84 auch für die zweiten Laufradschaufeln 84.

In den Figuren 6a) bis 6c) ist das erfindungsgemäße erste Leitrad 78 dargestellt, welches insgesamt vierzehn erste Leitradschaufeln 90 aufweist.

In den Figuren 7a) bis 7c) ist das erfindungsgemäße zweite Leitrad 82 dargestellt, das insgesamt zwölf Rückführschaufeln 86, die in Figur 7a) gestrichelt dargestellt sind, und vierzehn zweite Leitradschaufeln 88 aufweist.

Im Betrieb des ORC-Kreislaufs wird das erste Prozessfluid 18 radial in das Turbinengehäuse 25 eingeleitet und gelangt in einen Ringraum 92 (vgl. Figur 4), der vom Turbinengehäuse 25, vom Zwischenstück 80 und vom ersten Leitrad 78 gebildet wird. Vom Ringraum 92 trifft das erste Prozessfluid 18 auf die ersten Leitradschaufeln 90, die den Weg des ersten Prozessfluids 18 so vorgeben, dass die ersten Laufradschaufeln 84 so weit wie möglich optimal angeströmt werden, wodurch das erste Laufrad 74 und folglich die Welle 30 und der Rotor 75 in Drehung versetzt werden. Beim Durchströmen der ersten Laufradschaufeln 84 strömt das erste Prozessfluid 18 radial nach innen und anschließend etwas axial, um dann auf die Seite des zweiten Leitrads 82 zu treffen, welche die Rückführschaufeln 86 aufweist. Die Rückführschaufeln 86 führen das erste Prozessfluid 18 radial nach außen und die zweiten Leitradschaufeln 88 des zweiten Leitrads 82 anschließend so radial nach innen, dass die Laufradschaufeln 84 des zweiten Laufrads 77 optimal angeströmt werden, um zusätzlich die kinetische Energie des ersten Prozessfluids 18 in Rotationsenergie umzuwandeln, die wiederum im Generator 26 in elektrische Energie umgewandelt wird.

Durch diesen zweistufigen Aufbau der Turbine 24 wird die kinetische Energie des ersten Prozessfluids 18 besser genutzt als beispielsweise bei einem einstufigen Aufbau, weshalb der Wirkungsgrad der erfindungsgemäßen Vorrichtung 10₃ weiter gesteigert wird.

### Bezugszeichenliste

- 10, 10₁ - 10₃: Vorrichtung
- 11: Wärmequelle
- 12: Trägermedium
- 14: Verdampfer
- 16: erster Kreislauf
- 18: erstes Prozessfluid
- 20: Leitung
- 22: Entspannungsmaschine
- 24: Turbine
- 25: Turbinengehäuse
- 26: Generator
- 27: Generatorgehäuse
- 28: erster Kondensator
- 29: Generator-Kühleinheit

- 30: Welle
- 34: erste Fluidenergiemaschine
- 36: Pumpe
- 40: zweiter Kreislauf
- 42: zweites Prozessfluid
- 44: zweite Fluidenergiemaschine
- 46: Verdichter
- 47: Wärmetauscher
- 48: zweiter Kondensator

- 50: Drossel
- 52, 52₁, 52₂: weiterer Kreislauf
- 53, 53₁, 53₂: weiteres Prozessfluid
- 54: erster Wärmetauscher
- 55: Expansionsbehälter
- 56: weitere Fluidenergiemaschine
- 57: Expansionsbehälter-Kühleinheit
- 58: zweiter Wärmetauscher

- 60: dritter Kondensator
- 62: vierter Kondensator
- 64: weitere Drossel
- 65: Wärmeübertragungseinrichtung
- 66: Turbinen-Kühleinheit
- 68: Kühlmittel
- 70: Turbinen-Generator

- 72: Kanäle
- 73: Lagerung
- 74: erstes Laufrad
- 75: Rotor
- 76: Tandem-Lagerung
- 77: zweites Laufrad
- 78: erstes Leitrad
- 79: Stator
- 80: Zwischenstück

- 82: zweites Leitrad
- 84: erste und zweite Laufradschaufel
- 86: Rückführschaufel
- 88: zweite Leitradschaufel
- 90: erste Leitradschaufel
- 92: Ringraum

## Patentansprüche

1. Vorrichtung zum Durchführen eines ORC-Prozesses, umfassend einen ersten Kreislauf (16), in welchem ein erstes Prozessfluid (18) geführt wird, mit
- einem Verdampfer (14) zum Verdampfen des ersten Prozessfluids (18),
- einer stromabwärts des Verdampfers (14) angeordneten Entspannungsmaschine (22) zum Entspannen des verdampften ersten Prozessfluids (18), wobei die Entspannungsmaschine (22) mit einem Generator (26) zum Erzeugen von elektrischer Energie verbindbar ist,
- einem stromabwärts der Entspannungsmaschine (22) angeordneten ersten Kondensator (28) zum Kondensieren des entspannten ersten Prozessfluids (18),
- einer stromabwärts des ersten Kondensators (28) angeordneten ersten Fluidenergiemaschine (34) zum Erhöhen des Drucks des kondensierten ersten Prozessfluids (18) und zum Fördern des ersten Prozessfluids (18) zum Verdampfer (14), der stromabwärts der ersten Fluidenergiemaschine (34) angeordnet ist, und
- einem zweiten Kreislauf (40), in welchem ein zweites Prozessfluid (42) durch den ersten Kondensator (28) geführt und dort verdampft wird, wobei der zweite Kreislauf (40) umfasst:
- eine stromabwärts des ersten Kondensators (28) angeordnete zweite Fluidenergiemaschine (44) zum Verdichten des verdampften zweiten Prozessfluids (42),
- einen stromabwärts der zweiten Fluidenergiemaschine (44) angeordneten zweiten Kondensator (48) zum Kondensieren des verdampften zweiten Prozessfluids (42), wobei der zweite Kondensator (48) vom ersten Prozessfluid (18) durchströmbar ist, und
- eine stromabwärts vom zweiten Kondensator (48) angeordnete Drossel (50) zum Drosseln des kondensierten zweiten Prozessfluids (42), **dadurch gekennzeichnet, dass**
- die Entspannungsmaschine (22) getriebelos mit einer Welle (30) mit dem Generator (26) verbindbar ist,
- stromabwärts der Entspannungsmaschine (22) ein Expansionsbehälter (55) zum Expandieren des ersten Prozessfluids (18) angeordnet ist und
- der Expansionsbehälter (55) eine Expansionsbehälter-Kühleinheit (57) aufweist.

2. Vorrichtung nach Anspruch 1,
**dadurch gekennzeichnet, dass** die Lagerung (73) der Welle (30) eine Tandem-Wälzlageranordnung (76) umfasst.

3. Vorrichtung nach Anspruch 1 oder 2,
**dadurch gekennzeichnet, dass** die Entspannungsmaschine (22) als eine Turbine (24) ausgebildet ist und ein Turbinengehäuse (25) umfasst, welches an einem Generatorgehäuse (27) des Generators (26) befestigbar ist.

4. Vorrichtung nach Anspruch 3,
**dadurch gekennzeichnet, dass** die Turbine (24) ein erstes Laufrad (74) mit einer Anzahl von ersten Laufradschaufeln (84) aufweist, welches auf der Welle (30) angeordnet ist, auf welcher ein Rotor (75) des Generators (26) angebracht ist.

5. Vorrichtung nach einem der Ansprüche 3 oder 4,
**dadurch gekennzeichnet, dass** das Generatorgehäuse (27) eine Generator-Kühleinheit (29) aufweist.

6. Vorrichtung nach einem der Ansprüche 3 bis 5,
**dadurch gekennzeichnet, dass** das Turbinengehäuse (25) eine Turbinen-Kühleinheit (66) aufweist.

7. Vorrichtung nach Anspruch 6,
**dadurch gekennzeichnet, dass** die Turbinen-Kühleinheit (66) vom zweiten Prozessfluid (42) durchströmbar ist.

8. Vorrichtung nach einem der vorherigen Ansprüche,
**dadurch gekennzeichnet, dass** die Expansionsbehälter-Kühleinheit (57) vom zweiten Prozessfluid (42) durchströmbar ist.

9. Vorrichtung nach einem der vorherigen Ansprüche,
**gekennzeichnet durch** einen oder mehrere weitere Kreisläufe (52), in welchen jeweils ein weiteres Prozessfluid (53) geführt wird, welches oder welche durch einen oder mehrere erste Wärmetauscher (54), die vom ersten Prozessfluid (18) durchströmbar sind, erwärmt werden, wobei der oder die weiteren Kreisläufe (52) umfassen:
- jeweils eine stromabwärts des ersten Wärmetauschers (54) angeordneten weitere Fluidenergiemaschine (56) zum Verdichten des oder der erwärmten weiteren Prozessfluide (53),
- jeweils einen stromabwärts der weiteren Fluidenergiemaschine (56) angeordneten zweiten Wärmetauscher (58) zum Übertragen von Wärme von dem oder den verdichteten weiteren Prozessfluiden (53) auf das erste Prozessfluid (18), wobei der zweite Wärmetauscher (58) vom ersten Prozessfluid (18) durchströmbar ist, und
- jeweils eine stromabwärts vom zweiten Wärmetauscher (58) angeordnete weitere Drossel (64) zum Drosseln des oder der kondensierten weiteren Prozessfluide.

10. Vorrichtung nach den Ansprüchen 5 und 9,
**dadurch gekennzeichnet, dass** die Generator-Kühleinheit (29) von einem der weiteren Prozessfluide (53) durchströmbar ist.

11. Vorrichtung nach Anspruch 5,
**gekennzeichnet durch** einen ersten weiteren Kreislauf (52₁), in welchem ein erstes weiteres Prozessfluid (53₁) geführt wird, welches durch die Generator-Kühleinheit (29) strömt und dabei erwärmt wird, wobei der erste weitere Kreislauf (52₁) umfasst:
- jeweils eine stromabwärts der Generator-Kühleinheit (29) angeordnete weitere Fluidenergiemaschine (56) zum Verdichten des erwärmten ersten weiteren Prozessfluids (53₁),
- jeweils einen stromabwärts der weiteren Fluidenergiemaschine (56) angeordneten zweiten Wärmetauscher (58) zum Übertragen von Wärme vom verdichteten ersten weiteren Prozessfluid (53₁) auf das erste Prozessfluid (18), wobei der zweite Wärmetauscher (58) vom ersten Prozessfluid (18) durchströmbar ist, und
- jeweils eine stromabwärts vom zweiten Wärmetauscher (58) angeordnete weitere Drossel (64) zum Drosseln des kondensierten ersten weiteren Prozessfluids (53₁).

12. Vorrichtung nach Anspruch 5, **gekennzeichnet durch** einen ersten weiteren Kreislauf (52₁), in welchem ein erstes weiteres Prozessfluid (53₁) geführt wird, welches durch eine Wärmeübertragungseinrichtung (65) strömt und dabei erwärmt wird, wobei der erste weitere Kreislauf (52₁) umfasst:
- jeweils eine stromabwärts der Wärmeübertragungseinrichtung (65) angeordnete weitere Fluidenergiemaschine (56) zum Verdichten des erwärmten ersten weiteren Prozessfluids (53₁),
- jeweils einen stromabwärts der weiteren Fluidenergiemaschine (56) angeordneten zweiten Wärmetauscher (58) zum Übertragen von Wärme vom verdichteten ersten weiteren Prozessfluid (53₁) auf das erste Prozessfluid (18), wobei der zweite Wärmetauscher (58) vom ersten Prozessfluid (18) durchströmbar ist, und
- jeweils eine stromabwärts vom zweiten Wärmetauscher (58) angeordnete weitere Drossel (64) zum Drosseln des kondensierten ersten weiteren Prozessfluids (53₁), wobei
- ein zweiter weiterer Kreislauf vorgesehen ist, in welchem ein zweites weiteres Prozessfluid (53₂) geführt wird, welches die Generator-Kühleinheit (29) und die Wärmeübertragungseinrichtung (65) durchströmt.

13. Vorrichtung nach den Ansprüchen 6 und 9 oder nach den Ansprüchen 6 und 11 oder nach den Ansprüchen 6 und 12,
**dadurch gekennzeichnet, dass** die Turbinen-Kühleinheit (66) vom weiteren Prozessfluid (53) oder vom ersten weiteren Prozessfluid (53₁) durchströmbar ist.

14. Vorrichtung nach Anspruch 9 oder nach Anspruch 11 oder nach Anspruch 12 wenn nicht nach Anspruch 8, **dadurch gekennzeichnet, dass** die Expansionsbehälter-Kühleinheit (57) oder vom weiteren Prozessfluid (53) oder vom ersten weiteren Prozessfluid (53₁) durchströmbar ist.

## Claims

1. Device for performing an ORC process comprising a first circular flow (16), in which a first process fluid (18) is conducted, having
- an evaporator (14) for evaporating the first process fluid (18),
- an expansion machine (22) located downstream of the evaporator (14) for expanding the evaporated first process fluid (18), wherein the expansion machine (22) is connectable to a generator (26) for generating electrical energy,
- a first condenser (28) located downstream of the expansion machine (22) for condensing the expanded first process fluid (18),
- a first fluid energy machine (34) located downstream of the first condenser (28) for increasing the pressure of the condensed first process fluid (18) and for transporting the first process fluid (18) to the evaporator (14), that is located downstream of the first fluid energy machine (34), and
a second circular flow (40), in which a second process fluid (42) is conducted through the first condenser (28) and is evaporated therein, wherein the second circular flow (40) comprises:
- a second fluid energy machine (44) located downstream of the first condenser (28) for compressing the evaporated second process fluid (42),
- a second condenser (48) located downstream of the second fluid energy machine (44) for condensing the evaporated second process fluid (42), wherein the first process fluid (18) can flow through the second condenser (48), and
a throttle (50) located downstream of the second condenser (48) for throttling the condensed second process fluid (42), **characterized in that** the expansion machine (22) is connectable to the generator (26) by a shaft (30) without a gearing mechanism,
- an expansion tank (55) is located downstream of the expansion machine (22) for expanding the first process fluid (18) and
- the expansion tank (55) comprises an expansion tank cooling unit (57).

2. Device according to claim 1, **characterized in that** the bearing (73) of the shaft (30) comprises a tandem roller bearing configuration (76).

3. Device according to claim 1 or 2, **characterized in that** the expansion machine (22) is embodied as a turbine (24) and comprises a turbine housing (25), that is connectable to a generator housing (27) of the generator (26).

4. Device according to claim 3, **characterized in that** the turbine (24) comprises a first impeller (74) having a number of first impeller vanes (84), located on the shaft (30), on which a rotor (75) of the generator (26) is arranged.

5. Device according to one of claims 3 or 4, **characterized in that** the generator housing (27) comprises a generator cooling unit (29).

6. Device according to one of claims 3 to 5, **characterized in that** the turbine housing (25) comprises a turbine cooling unit (66).

7. Device according to claim 6, **characterized in that** the second process fluid (42) can flow through the turbine cooling unit (66).

8. Device according to one of the previous claims, **characterized in that** the second process fluid (42) can flow through the expansion tank cooling unit (57).

9. Device according to one of the previous claims, **characterized by** one or more further circular flows (52), in each of which a further process fluid (53) is conducted, the further process fluid or fluids being heated by one or more first heat exchangers (54), through which the first process fluid (18) can flow, wherein the one or more further circular flows (52) comprise:
- in each case a further fluid energy machine (56) located downstream of the first heat exchanger (54) for compressing the heated further process fluid or fluids (53),
- in each case a second heat exchanger (58) located downstream of the further fluid energy machine (56) for transferring heat from the compressed further process fluid or fluids (53) to the first process fluid (18), wherein the first process fluid (18) can flow through the second heat exchanger (58), and
- in each case a further throttle (64) located downstream of the second heat exchanger (58) for throttling the condensed further process fluid or fluids.

10. Device according to the claims 5 and 9, **characterized in that** one of the further process fluids (53) can flow through the generator cooling unit (29).

11. Device according to claim 5, **characterized by** a first further circular flow (52₁), in which a first further process fluid (53₁) is conducted, that flows through the generator cooling unit (29) and is heated thereby, wherein the first further circular flow (52₁) comprises:
- in each case a further fluid energy machine (56) located downstream of the generator cooling unit (29) for compressing the heated first further process fluid (53₁),
- in each case a second heat exchanger (58) located downstream of the further fluid energy machine (56) for transferring heat from the compressed first further process fluid (53₁) to the first process fluid (18), wherein the first process fluid (18) can flow through the second heat exchanger (58), and
- in each case a further throttle (64) located downstream of the second heat exchanger (58) for throttling the condensed first further process fluid (53₁).

12. Device according to claim 5, **characterized by** a first further circular flow (52₁), in which a first further process fluid (53₁) is conducted, that flows through a heat transfer unit (65) and is heated thereby, wherein the first further circular flow (52₁) comprises:
- in each case a further fluid energy machine (56) located downstream of the heat transfer unit (65) for compressing the heated first further process fluid (53₁),
- in each case a second heat exchanger (58) located downstream of the further fluid energy machine (56) for transferring heat from the compressed first further process fluid (53₁) to the first process fluid (18), wherein the first process fluid (18) can flow through the second heat exchanger (58), and
- in each case a further throttle (64) located downstream of the second heat exchanger (58) for throttling the condensed first further process fluid (53₁), wherein
- a second further circular flow is provided, in which a second further process fluid (53₂) is conducted, that flows through the generator cooling unit (29) and the heat transfer unit (65).

13. Device according to claims 6 and 9 or according to claims 6 and 11 or according to claims 6 and 12, **characterized in that** the further process fluid (53) or the first further process fluid (53₁) can flow through the turbine cooling unit (66).

14. Device according to claim 9 or according to claim 11 or according to claim 12, unless according to claim 8, **characterized in that** the further process fluid (53) or the first further process fluid (53₁) can flow through the expansion tank cooling unit (57).

## Revendications

1. Dispositif destiné à effectuer un processus ORC, comprenant un premier circuit (16), dans lequel un premier fluide de procédé (18) est guidé, avec
- un évaporateur (14) destiné à vaporiser le premier fluide de procédé (18),
- une machine de détente (22) arrangée en aval de l'évaporateur (14) et destinée à détendre le premier fluide de procédé (18) vaporisé, la machine de détente (22) étant reliée à un générateur (26) destiné à produire de l'énergie électrique,
- un premier condenseur (28) arrangé en aval de la machine de détente (22) et destiné à condenser le premier fluide de procédé (18) détendu,
- une première machine d'énergie de fluide (34) arrangée en aval du premier condenseur (28) et destinée à augmenter la pression du premier fluide de procédé (18) condensé et à pousser le premier fluide de procédé (18) vers l'évaporateur (14), qui est arrangé en aval de la première machine d'énergie de fluide (34), et
- un second circuit (40), dans lequel un second fluide de procédé (42) est guidé par le premier évaporateur (28) et y est évaporé, le second circuit (40) comprenant :
- une seconde machine d'énergie de fluide (44) arrangée en aval du premier condenseur (28) et destinée à comprimer le second fluide de procédé (42) vaporisé,
- un second condensateur (48) arrangé en aval de la seconde machine d'énergie de fluide (44) et destiné à condenser le second fluide de procédé (42) vaporisé, le second condensateur (48) étant susceptible d'être traversé par le premier fluide de procédé (18), et
- un étrangleur (50) arrangé en aval du second condenseur (48) et destiné à étrangler le second fluide de procédé (42) condensé, **caractérisé en ce que**
- la machine de détente (22) est susceptible d'être reliée sans engrenage au générateur (26) à l'aide d'un arbre (30),
- un réservoir d'expansion (55) destiné à dilater le premier fluide de procédé (18) est arrangé en aval de la machine de détente (22) et
- le réservoir d'expansion (55) comprend une unité de refroidissement de réservoir d'expansion (57).

2. Dispositif selon la revendication 1,
**caractérisé en ce que** le support (73) de l'arbre (30) comprend un montage de palier à roulements en tandem (76).

3. Dispositif selon l'une des revendications 1 ou 2,
**caractérisé en ce que** la machine de détente (22) est une turbine (24) et comprend un boîtier de turbine (25), lequel est fixé à un boîtier de générateur (27) du générateur (26).

4. Dispositif selon la revendication 3,
**caractérisé en ce que** la turbine (24) comprend une première roue (74) avec une pluralité de premières pales de rotor (84), laquelle est monté sur l'arbre (30), sur lequel est monté un rotor (75) du générateur (26).

5. Dispositif selon l'une des revendications 3 ou 4,
**caractérisé en ce que** le boîtier de générateur (27) comprend une unité de refroidissement de générateur (29).

6. Dispositif selon l'une des revendications 3 à 5,
**caractérisé en ce que** le boîtier de turbine (25) comprend une unité de refroidissement de turbine (66).

7. Dispositif selon la revendication 6,
**caractérisé en ce que** l'unité de refroidissement de turbine (66) est susceptible d'être traversée par le second fluide de procédé (42).

8. Dispositif selon l'une des revendications précédentes,
**caractérisé en ce que** l'unité de refroidissement de réservoir d'expansion (57) est susceptible d'être traversée par le second fluide de procédé (42).

9. Dispositif selon l'une des revendications précédentes,
**caractérisé par** un ou plusieurs autres circuits (52), dans lesquels un autre fluide de procédé (53) est respectivement guidé, lequel ou lesquels sont chauffés par un ou plusieurs premiers échangeurs thermiques (54) susceptibles d'être traversés par le premier fluide de procédé (18), le ou les autres circuits (52) comprenant :
- chacun une première machine d'énergie de fluide (56) arrangée en aval du premier échangeur thermique (54) et destinée à comprimer le ou les autres fluides de procédé (53) chauffés,
- chacun une second échangeur thermique (58) arrangé en aval de l'autre machine d'énergie de fluide (56) et destiné à transmettre de la chaleur du ou des autres fluides de procédé (53) comprimés vers le premier fluide de procédé (18), le second échangeur thermique (58) étant susceptible d'être traversé par le premier fluide de procédé (18), et
- chacun un autre étrangement (64) arrangé à l'aval du second échangeur thermique (58) et destiné à étrangler le ou les autres fluides de procédé (53) condensés.

10. Dispositif selon les revendications 5 et 9,
**caractérisé en ce que** l'unité de refroidissement de générateur (29) est susceptible d'être traversée par un des autres fluides de procédé (53).

11. Dispositif selon la revendication 5,
**caractérisé par** un premier autre circuit (52₁), dans lequel un premier autre fluide de procédé (53₁) est guidé, lequel passe à travers l'unité de refroidissement de générateur (29) et est en même temps chauffé, le premier autre circuit (52₁) comprenant :
- chacun une autre machine d'énergie de fluide (56) arrangée en aval de l'unité de refroidissement de générateur (29) et destinée à comprimer le premier autre fluide de procédé (53₁) chauffé,
- chacun une second échangeur thermique (58) arrangé en aval de l'autre machine d'énergie de fluide (56) et destiné à transmettre de la chaleur du premier autre fluide de procédé (53₁) comprimé vers le premier fluide de procédé (18), le second échangeur thermique (58) étant susceptible d'être traversé par le premier fluide de procédé (18), et
- chacun un autre étrangement (64) arrangé en aval du second échangeur thermique (58) et destiné à étrangler le premier autre fluide de procédé (53₁) condensé.

12. Dispositif selon la revendication 5, **caractérisé par** un premier autre circuit (52₁), dans lequel un premier autre fluide de procédé (53₁) est guidé, lequel passe à travers un appareil de transmission de chaleur (65) et est en même temps chauffé, le premier autre circuit (52₁) comprenant :
- chacun une autre machine d'énergie de fluide (56) arrangée en aval de l'appareil de transmission de chaleur (65) et destinée à comprimer le premier autre fluide de procédé (53₁) chauffé,
- chacun une second échangeur thermique (58) arrangé en aval de l'autre machine d'énergie de fluide (56) et destiné à transmettre de la chaleur du premier autre fluide de procédé (53₁) comprimé vers le premier fluide de procédé (18), le second échangeur thermique (58) étant susceptible d'être traversé par le premier fluide de procédé (18), et
- chacun un autre étrangement (64) arrangé en aval du second échangeur thermique (58) et destiné à étrangler le premier autre fluide de procédé (53₁) condensé,
- un second autre circuit étant prévu, dans lequel un second autre fluide de procédé (53₂) est guidé, lequel passe par l'unité de refroidissement de générateur (29) et l'appareil de transmission de chaleur (65).

13. Dispositif selon les revendications 6 et 9 ou selon les revendications 6 et 11 ou selon les revendications 6 et 12,
**caractérisé en ce que** l'unité de refroidissement de turbine (66) est traversée par l'autre fluide de procédé (53) ou par le premier autre fluide de procédé (53₁).

14. Dispositif selon la revendication 9 ou selon la revendication 11 ou selon la revendication 12 quand elles ne sont pas en combinaison avec la revendication 8,
**caractérisé en ce que** l'unité de refroidissement de réservoir d'expansion (57) est susceptible d'être traversée ou par l'autre fluide de procédé (53) ou par le premier autre fluide de procédé (53₁).
